# FASCICULE DE BREVET EUROPEEN

(11) **EP 2 215 410 B1**
(45) Date de publication et mention de la délivrance du brevet: **01.06.2011**
(21) Numéro de dépôt: 08869347.8
(22) Date de dépôt: 17.10.2008
(51) Int. Cl.: F25B 21/00

(54) **GENERATEUR THERMIQUE A MATERIAU MAGNETOCALORIQUE**
WÄRMEGENERATOR MIT MAGNETOKALORISCHEM MATERIAL
THERMAL GENERATOR WITH MAGNETO-CALORIC MATERIAL

(30) Priorité: 30.10.2007 FR 0707612
(43) Date de publication de la demande: 11.08.2010
(73) Titulaire: Cooltech Applications S.A.S., 67810 Holtzheim (FR)
(72) Inventeur: HEITZLER, Jean-Claude, F-68180 Horbourg-Wihr (FR); MULLER, Christian, F-67000 Strasbourg (FR)
(74) Mandataire: Nithardt, Roland
(86) Numéro de dépôt international: PCT/FR2008/001467
(87) Numéro de publication internationale: WO 2009/087310

(56) Documents cités:
- EP-A- 0 357 291
- WO-A-2004/059221
- WO-A-2005/095872
- WO-A-2007/026062
- WO-A-2007/086638
- JP-A- 58 088 474
- US-A1- 2007 125 095
- US-B1- 6 959 554
- US-B1- 7 038 565

## Description

### Domaine technique :

La présente invention concerne un générateur thermique comportant des éléments magnétocaloriques, des moyens magnétiques agencés pour soumettre alternativement lesdits éléments magnétocaloriques à une variation de champ magnétique et créer alternativement dans chaque élément magnétocalorique un cycle de chauffage et un cycle de refroidissement, au moins un fluide caloporteur agencé pour collecter les calories et/ou les frigories produites par lesdits éléments magnétocaloriques au cours des cycles de chauffage et de refroidissement, au moins une chambre d'échange chaude et une chambre d'échange froide prévues respectivement aux extrémités chaude et froide dudit générateur, et des moyens de circulation du fluide caloporteur entre lesdits éléments magnétocaloriques et lesdites chambres d'échange, ledit générateur comportant au moins un module thermique comportant au moins un jeu de N éléments magnétocaloriques.

### Technique antérieure :

La technologie du froid magnétique est connue depuis plus d'une vingtaine d'années et on sait les avantages qu'elle apporte en termes d'écologie et de développement durable. On connaît également ses limites quant à sa puissance calorifique utile et à son rendement. Dès lors, les recherches menées dans ce domaine tendent toutes à améliorer les performances d'un tel générateur, en jouant sur les différents paramètres, tels que la puissance d'aimantation, les performances de l'élément magnétocalorique, la surface d'échange entre le fluide caloporteur et les éléments magnétocaloriques, les performances des échangeurs de chaleur, etc.

La publication US 4,829,770 porte notamment sur la composition des éléments magnétocaloriques et décrit un générateur thermique utilisant de tels éléments et fonctionnant sur le principe du moteur Stirling. Ces éléments magnétocaloriques fixes sont traversés par un gaz caloporteur, notamment de l'azote, le tout étant contenu dans un réservoir animé d'un mouvement de translation alternatif, synchronisé sur la variation de champ magnétique. Des échangeurs de chaleur à l'hélium sont connectés aux extrémités chaude et froide du réservoir pour transférer les calories et les frigories collectées par le gaz caloporteur à des circuits extérieurs. Les éléments magnétocaloriques se présentent sous la forme de disques poreux, empilés dans le réservoir, séparés l'un de l'autre pour délimiter plusieurs chambres, ou accolés l'un à l'autre pour délimiter deux seules chambres, selon la forme de réalisation choisie. Chaque mouvement du réservoir correspond à un cycle froid ou à un cycle chaud et provoque un seul sens de circulation du gaz caloporteur. Les cycles de production de calories et de frigories sont donc alternés et non simultanés. De plus, le pouvoir caloporteur d'un gaz est nettement moins performant que celui d'un liquide. La surface d'échange entre le gaz caloporteur et les éléments magnétocaloriques est également très restreinte. Compte tenu des très basses températures de fonctionnement, de l'ordre de -200°C, l'utilisation d'un tel générateur thermique est limitée à des applications laboratoires. En conclusion, le pouvoir calorifique d'un tel générateur thermique est trop faible pour trouver une application industrielle ou domestique.

La publication WO 2005/093343 décrit le principe d'un générateur thermique magnétocalorique, utilisant comme fluide caloporteur l'air à réchauffer ou à refroidir d'un véhicule automobile. Cette solution prévoit que, dans une phase de démarrage, le système de réfrigération fonctionne en circuit fermé, l'air étant animé d'un mouvement de va-et-vient au travers de l'élément magnétocalorique entre un réservoir chaud et un réservoir froid, par un système à pistons et balancier, jusqu'à atteindre le gradient de température voulu. Comme dans l'exemple précédent, chaque mouvement du piston correspond à un cycle froid ou à un cycle chaud et provoque un seul sens de circulation du flux d'air. Les cycles de production de calories et de frigories sont donc alternés et non simultanés. De plus, la surface d'échange entre l'air et l'élément magnétocalorique est très faible et ne permet pas d'atteindre un pouvoir calorifique suffisant pour une application industrielle ou domestique, compte tenu également du fait que le fluide caloporteur n'est pas un liquide mais un gaz.

La publication WO 2007/026062 qui appartient à la demanderesse décrit un générateur magnétocalorique comportant deux circuits collecteurs distincts, à savoir un circuit collecteur chaud et un circuit collecteur froid, étanches hydrauliquement l'un par rapport à l'autre, et couplés chacun à un échangeur thermique servant de moyen d'évacuation des calories ou frigories. Le fluide caloporteur circule en boucle fermée dans les circuits collecteurs qui comportent une partie extérieure au générateur et nécessitent au moins une pompe, des moyens de commutation synchronisés sur la variation du champ magnétique, des conduits et des raccords.

La publication WO 2007/086638 représente un autre exemple de générateur magnétocalorique à circuits collecteurs distincts.

### Exposé de l'invention:

La présente invention vise à résoudre ce problème en proposant une solution industrielle d'un générateur thermique à matériau magnétocalorique économiquement rentable, et modulaire pour être facilement configurable en fonction d'un cahier des charges donné dans le cadre d'applications aussi bien industrielles que domestiques. Elle vise également à simplifier et à rationaliser la circulation du fluide caloporteur en supprimant le recours à un ou plusieurs circuits hydrauliques.

Dans ce but, l'invention concerne un générateur thermique du genre indiqué en préambule, caractérisé en ce que lesdits moyens de circulation sont synchronisés avec la variation du champ magnétique et agencés pour déplacer alternativement ledit fluide caloporteur à l'intérieur dudit module thermique simultanément dans deux directions opposées, entre les chambres d'échange chaude et froide à travers lesdits éléments magnétocaloriques, selon un mouvement de va-et-vient, de sorte qu'une première fraction de fluide caloporteur circule en direction de la chambre d'échange chaude à travers lesdits éléments magnétocaloriques soumis à un cycle de chauffage, et qu'une seconde fraction de fluide caloporteur circule en direction de la chambre d'échange froide à travers lesdits éléments magnétocaloriques soumis à un cycle de refroidissement, et inversement, et en ce que les moyens de circulation comportent au moins un jeu de N pistons disposés en regard desdits éléments magnétocaloriques et animés d'un mouvement de translation alternatif par un mécanisme d'entraînement comportant au moins une came de commande entraînée par un actionneur.

Ainsi, on obtient un nombre N de mini-générateurs thermiques fonctionnant simultanément et en parallèle, permettant de multiplier par le coefficient N la surface d'échange avec le fluide caloporteur et ainsi le pouvoir calorifique d'un tel générateur. De plus, chaque cycle magnétique est utilisé de manière optimale puisque le déplacement du fluide caloporteur dans les deux sens de circulation permet de collecter simultanément les calories produites par les éléments magnétocaloriques soumis à une augmentation du champ magnétique (cycle de chauffage) et les frigories produites par les éléments magnétocaloriques soumis à une diminution du champ magnétique (cycle de refroidissement).

Les chambres d'échange chaude et froide forment des chambres de récupération de l'énergie thermique produite par le générateur et permettent de réaliser un mélange du fluide caloporteur issu d'une part, d'un cycle d'échauffement pour la chambre chaude et, d'autre part, d'un cycle de refroidissement pour la chambre froide.

De préférence, les éléments magnétocaloriques comportent des passages de fluide débouchant, ces passages de fluide étant formés de pores, de canaux, de rainures ou d'une combinaison de ces éléments.

Dans une forme de réalisation préférée, les moyens de circulation comportent deux jeux de N pistons disposés de chaque côté desdits éléments magnétocaloriques pour déplacer le fluide caloporteur dans les deux sens de circulation.

La came de commande peut comporter un profil de came de forme sensiblement sinusoïdale, dont l'amplitude détermine la course desdits pistons et dont la phase sinusoïde correspond globalement à un cycle de chauffage et un cycle de refroidissement desdits éléments magnétocaloriques.

Les moyens magnétiques peuvent comporter à proximité desdits éléments magnétocaloriques au moins un arrangement magnétique formé de zones aimantées et de zones non aimantées alternées, ledit arrangement magnétique étant couplé à un actionneur pour être mobile par rapport auxdits éléments magnétocaloriques.

Ces moyens magnétiques comportent, de préférence, un dispositif de fermeture de champ disposé à l'opposé dudit arrangement magnétique pour fermer le flux magnétique généré par lesdites zones aimantées à travers lesdits éléments magnétocaloriques.

Chaque couple formé par une zone aimantée et une zone non aimantée dudit arrangement magnétique s'étend avantageusement sur une distance correspondant globalement à une sinusoïde dudit profil de came.

Dans la forme de réalisation préférée, chaque zone aimantée comporte au moins deux aimants permanents de polarité opposée, assemblés à un noyau à forte perméabilité magnétique de manière à concentrer le flux magnétique desdits aimants en direction des éléments magnétocaloriques.

Le module thermique peut présenter avantageusement une structure circulaire dans laquelle les éléments magnétocaloriques sont disposés en cercle autour d'un axe central et la came de commande ainsi que l'arrangement magnétique sont concentriques à cet axe central et entraînés en rotation autour dudit axe.

En variante de réalisation, le module thermique peut également présenter une structure linéaire dans laquelle les éléments magnétocaloriques sont alignés et la came de commande ainsi que l'arrangement magnétique sont entraînés en translation alternative le long desdits éléments.

Le générateur thermique peut avantageusement comporter un nombre X de modules thermiques empilés pour former un générateur à X étages thermiques et lesdits modules thermiques peuvent être assemblés deux à deux par des chambres intermédiaires. Dans ce cas, les pistons de deux modules thermiques consécutifs sont avantageusement communs.

Ainsi, en empilant plusieurs modules thermiques, le réchauffement et le refroidissement du fluide caloporteur s'effectuent de manière étagée, permettant d'augmenter à souhait le gradient de température entre les extrémités froide et chaude dudit générateur.

Les chambres intermédiaires peuvent communiquer avec lesdits pistons et former des chambres de brassage de fluide caloporteur entre deux modules thermiques consécutifs.

Les chambres intermédiaires peuvent aussi ne pas communiquer avec lesdits pistons, le fluide caloporteur passant d'un module thermique à un autre par lesdits éléments magnétocaloriques.

La chambre d'échange chaude et la chambre d'échange froide peuvent être reliées chacune à un circuit extérieur équipé d'un moyen autorisant un échange de chaleur uniquement après atteinte d'une température prédéfinie dans ladite chambre d'échange concernée.

### Description sommaire des dessins:

La présente invention et ses avantages apparaîtront mieux dans la description suivante de deux modes de réalisation donnés à titre d'exemple non limitatif, en référence aux dessins annexés, dans lesquels :
- la figure 1 est une vue en perspective et partiellement éclatée d'un premier mode de réalisation d'un générateur thermique selon l'invention,
- la figure 2 est une vue en perspective d'une partie du générateur de la figure 1,
- la figure 3 est une vue en plan du générateur de la figure 1,
- la figure 4 est une vue en coupe axiale du générateur de la figure 3,
- les figures 5 à 8 sont des sections radiales du générateur de la figure 3, respectivement selon les plans de coupe V-V, VI-VI, VII-VII et VIII-VIII,
- la figure 9 est une vue en perspective et partiellement éclatée d'un second mode de réalisation d'un générateur thermique selon l'invention,
- la figure 10 est une vue agrandie du détail X de la figure 9, et
- la figure 11 est une vue en coupe axiale du générateur de la figure 9.

### Illustrations de l'invention:

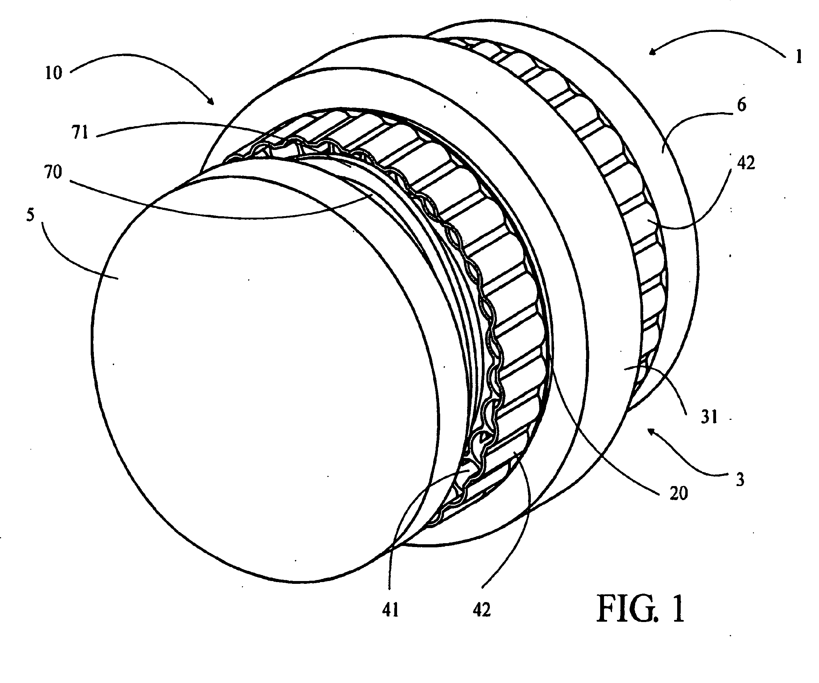

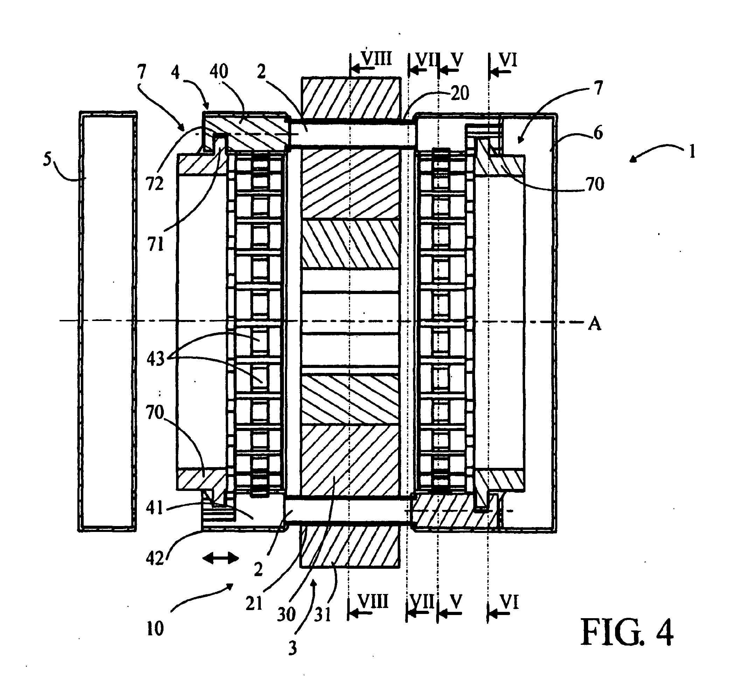

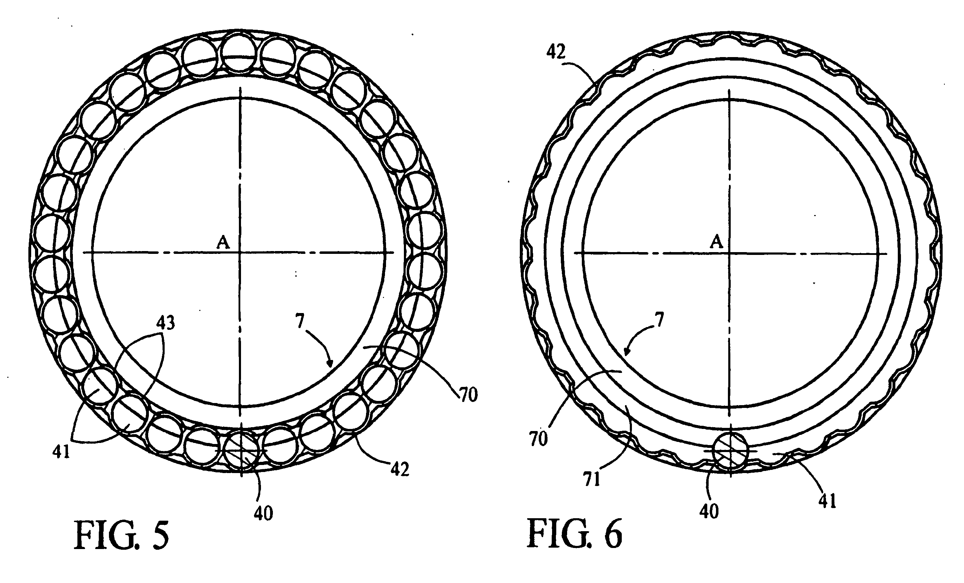

En référence aux figures 1 à 8 et plus particulièrement à la figure 4, le générateur thermique 1 selon l'invention comporte un module thermique 10 comprenant un nombre N d'éléments magnétocaloriques 2 disposés de manière adjacente en cercle autour d'un axe central A, formant une structure cylindrique annulaire. Ce mode de réalisation n'est qu'un exemple, sachant que le générateur thermique 1 peut également avoir une structure linéaire.

Ce générateur thermique 1 comporte des moyens magnétiques 3 aptes à soumettre alternativement les éléments magnétocaloriques 2 à une variation de champ de magnétique pour faire varier leur température selon le cycle de Carnot, et créer alternativement dans chaque élément magnétocalorique 2 un cycle de chauffage et un cycle de refroidissement. Ce générateur contient un fluide caloporteur mis en mouvement à l'intérieur dudit module thermique 10 par des moyens de circulation 4 afin de collecter les calories et les frigories produites par les éléments magnétocaloriques 2 au cours des cycles de chauffage et de refroidissement successifs, et de les stocker respectivement dans une chambre d'échange chaude 5 et une chambre d'échange froide 6 disposées aux extrémités chaude et froide de ce générateur. Chaque chambre d'échange 5, 6 est destinée à échanger avec un circuit extérieur via un échangeur de chaleur (non représenté) pour utiliser les calories et les frigories produites par ledit générateur. Les moyens de circulation 4 sont synchronisés avec la variation du champ magnétique pour déplacer le fluide caloporteur simultanément dans deux directions opposées, de sorte qu'une première fraction de fluide caloporteur circule en direction de la chambre d'échange chaude 5 à travers les éléments magnétocaloriques 2 soumis à un cycle de chauffage, et qu'une seconde fraction de fluide caloporteur circule en direction de la chambre d'échange froide 6 à travers les éléments magnétocaloriques 2 soumis à un cycle de refroidissement, et inversement.

Les éléments magnétocaloriques 2 sont, dans l'exemple représenté, constitués de tronçons partiellement cylindriques découpés, usinés et/ou moulés dans un matériau magnétocalorique, logés dans un support 20 fixe, pourvu de logements 21 de forme complémentaire. La forme des éléments magnétocaloriques 2 n'est pas limitative et peut être déclinée en toute autre forme tridimensionnelle. On entend par matériau magnétocalorique, un matériau réalisé en partie et en totalité dans une matière magnétocalorique, telle que par exemple du gadolinium (Gd), un alliage de gadolinium contenant par exemple du silicium (Si), du germanium (Ge), un alliage de manganèse contenant par exemple du fer (Fe), du magnésium (Mg), du phosphore (P), un alliage de lanthane, un alliage de nickel (Ni), tout autre matériau ou alliage magnétisable équivalent, ou d'une combinaison de différents matériaux magnétocaloriques, se présentant sous forme de poudre, de particules, de bloc plein, fritté ou poreux. Le choix entre ces matériaux magnétocaloriques se fait en fonction des puissances caloriques et frigorifiques recherchées et des plages de température requises. Ces éléments magnétocaloriques 2 sont perméables au fluide caloporteur et comportent à cet effet des passages de fluide débouchant, qui peuvent être constitués par les pores d'un matériau poreux, des mini ou des micro-canaux usinés dans un bloc plein ou obtenus par l'assemblage de plaques rainurées superposées, et similaires.

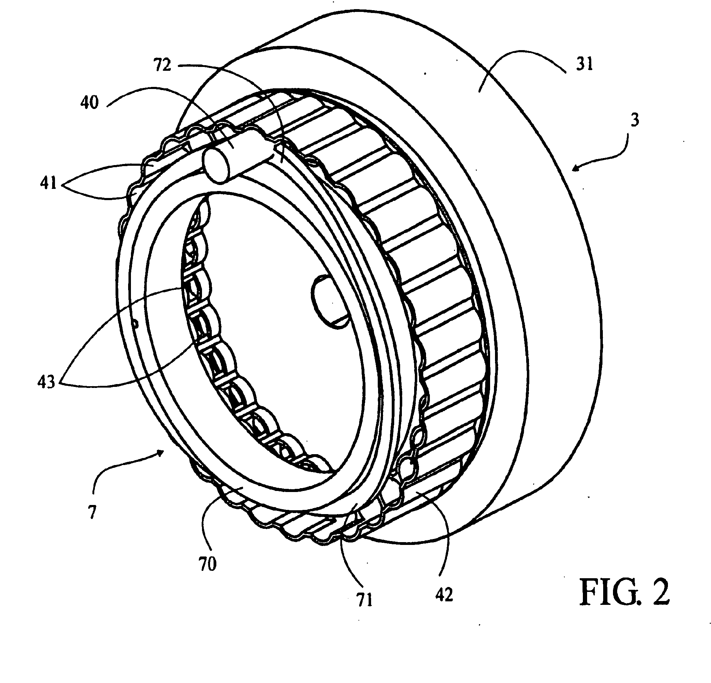

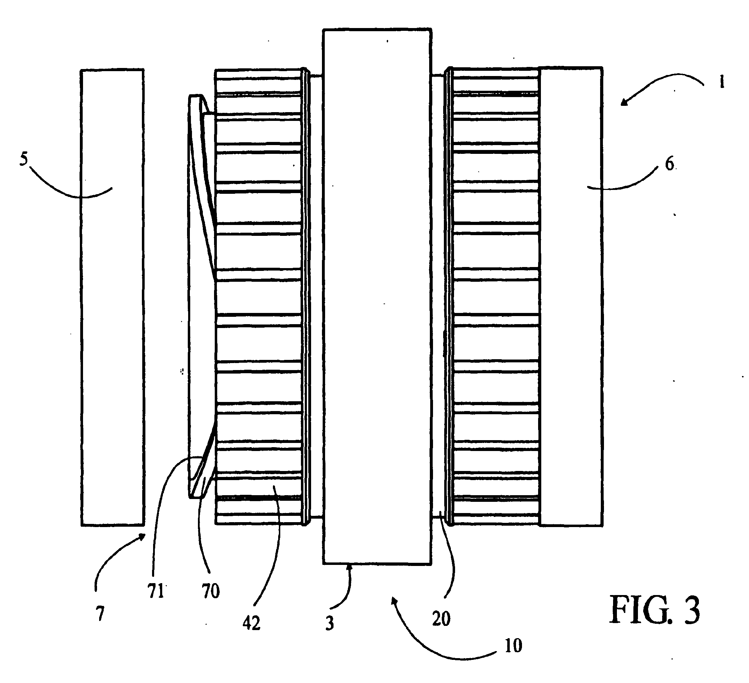

Les moyens de circulation 4 du fluide caloporteur comportent au moins un et de préférence deux jeux de N pistons 40, animés d'un mouvement de va-et-vient, parallèle à l'axe central A, par un mécanisme d'entraînement 7, chaque piston 40 étant disposé en regard et dans l'axe d'un élément magnétocalorique 2, pour pousser le fluide caloporteur contenu dans ledit module au travers dudit élément dans un sens de circulation selon que ledit élément subit un cycle de chauffage ou un cycle de refroidissement. Chaque élément magnétocalorique 2 est donc associé à deux pistons 40, alignés dans son axe et en regard de chaque extrémité, commandés en sens opposé. Pour que le fluide caloporteur circule d'une chambre d'échange 5, 6 à l'autre chambre d'échange 6, 5, la chemise 42 , comporte des orifices 43 mettant en communication le volume intérieur du module thermique 10 et le logement 41 des pistons 40. En référence à la structure circulaire du générateur thermique 1 tel qu'illustrée, les pistons 40 sont disposés de manière adjacente, en cercle autour de l'axe central A, et forment une structure annulaire. Dans le cas d'un générateur thermique linéaire, les pistons seraient alignés. Ces pistons 40 sont constitués de pièces cylindriques, guidées dans des logements 41 de forme complémentaire prévus dans une chemise 42. Toute autre forme de piston peut également convenir et peut être déterminée pour minimiser les pertes de charges hydrauliques. La chemise 42 est une pièce fixe, assemblée au support 20 des éléments magnétocaloriques 2, par tout moyen d'assemblage adapté. Le support 20 et la chemise 42 peuvent également être formés d'une seule et même pièce. Ces pièces sont de préférence réalisées dans des matériaux thermiquement isolants, tels que des matières synthétiques ou similaires. Dans l'exemple représenté, le mécanisme d'entraînement 7 comporte au moins une et de préférence deux cames de commande 70 couplées aux pistons 40, entraînées par un actionneur (non représenté). Chaque came de commande 70 peut comporter un profil de came 71 de forme sensiblement sinusoïdale (voir fig. 2 et 3) ou similaire, dont l'amplitude détermine la course des pistons 40 et dont la phase sinusoïdale correspond globalement à un cycle de chauffage et un cycle de refroidissement des éléments magnétocaloriques 2. Le profil de came 71 forme une nervure saillante, logée dans une gorge de chaque piston 40 assurant ainsi un couplage mécanique entre ces pièces. En référence à la structure circulaire du générateur thermique 1 tel qu'illustrée, les cames de commande 70 sont annulaires et entraînées en rotation continue ou non autour de l'axe central A, par un moteur électrique ou tout actionneur équivalent. Dans le cas d'un générateur thermique linéaire, les cames de commande sont rectilignes et animées d'un mouvement de translation alternative.

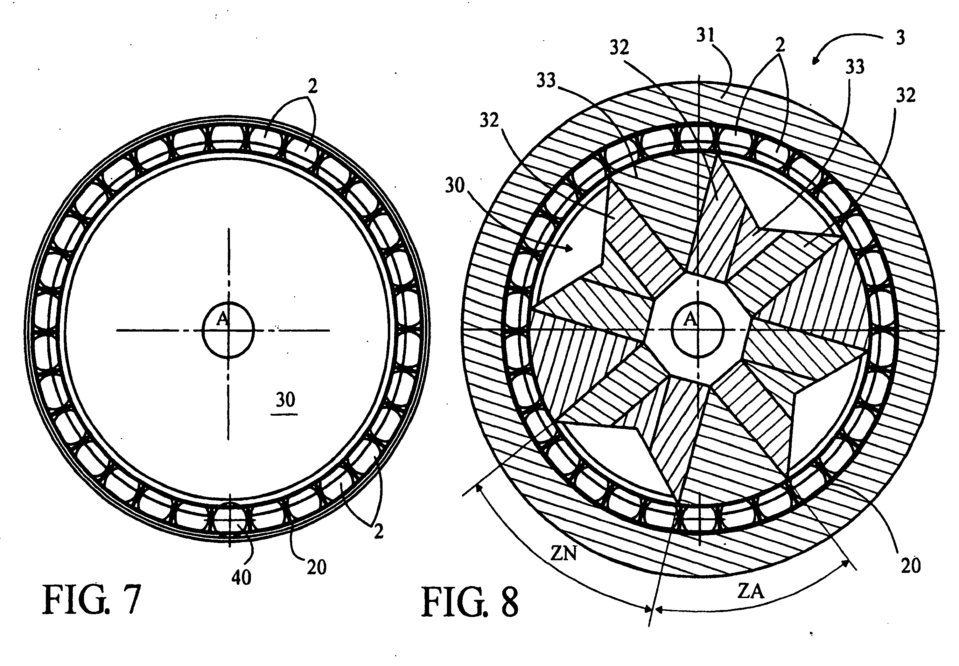

En référence plus particulièrement à la figure 8, les moyens magnétiques 3 comportent à proximité des éléments magnétocaloriques 2 un arrangement magnétique 30 formé de zones aimantées ZA et de zones non aimantées ZN alternées. Chaque couple de zones aimantée ZA et non aimantée ZN s'étend sur une distance correspondant globalement à une sinusoïde du profil de came 71, la zone aimantée ZA générant le cycle de chauffage et la zone non aimantée ZN le cycle de refroidissement. Dans l'exemple représenté, la zone aimantée ZA comporte au moins deux aimants permanents 32 de polarité opposée, assemblés à un noyau 33 à forte perméabilité magnétique de manière à concentrer le flux magnétique en direction des éléments magnétocaloriques 2. Bien entendu, toute autre construction ou disposition est possible. Dans l'exemple représenté et en référence à la structure circulaire du générateur, l'arrangement magnétique 30 est cylindrique, disposé à l'intérieur du générateur 1 et entraîné en rotation continue ou non autour de l'axe central A par un moteur électrique ou tout actionneur équivalent. Dans cet exemple, l'arrangement magnétique 30 comporte quatre paires de zones aimantée ZA et non aimantée ZN s'étendant chacune sur un secteur angulaire de 90°. En correspondance, le profil de came 71 des cames de commande 70 comporte quatre sinusoïdes s'étendant chacune sur un même secteur angulaire. Le profil de came 71 qui est illustré sur les figures ne montre que deux sinusoïdes pour simplifier la représentation graphique. Les moyens magnétiques 3 comportent également un dispositif de fermeture de champ 31 disposé à l'opposé de l'arrangement magnétique 30, et dans cet exemple à l'extérieur du générateur 1, pour fermer le flux magnétique généré par les zones aimantées ZA à travers les éléments magnétocaloriques 2. Dans le cas d'un générateur thermique linéaire, les moyens magnétiques 3 sont rectilignes et animés d'un mouvement de translation alternative.

Dans cet exemple, les organes mobiles du générateur thermique 1 sont concentriques à l'axe central A et peuvent être entraînés par un même actionneur intérieur et central ou par tout moyen équivalent. Dans le cas d'un générateur thermique de plus petit diamètre, il est possible d'inverser cette configuration, en prévoyant d'entraîner les organes mobiles par l'extérieur, les cames de commande 70 et l'arrangement magnétique 30 étant disposés à l'extérieur des éléments magnétocaloriques 2. Il est également possible de décaler angulairement le déplacement des pistons 40 par rapport au déplacement de l'arrangement magnétique 30 dans le but de tenir compte des inerties thermiques et hydrauliques.

Le fonctionnement du générateur thermique 1 consiste à commander le déplacement simultané et synchrone de l'arrangement magnétique 30 et des cames de commande 70 pour générer le déplacement alternatif du fluide caloporteur à l'intérieur du module thermique 10 entre les chambres d'échange chaude 5 et froide 6 à travers les éléments magnétocaloriques 2, simultanément dans deux directions opposées selon que lesdits éléments sont soumis ou non au champ magnétique. Le déplacement alternatif du fluide caloporteur à l'intérieur d'un même module thermique 10 permet d'augmenter le gradient de température entre les chambres d'échange chaude 5 et froide 6 disposées aux extrémités dudit générateur. Ces chambres d'échange 5, 6 sont conçues pour que les calories et frigories produites par le générateur puissent être véhiculées vers des circuits extérieurs d'utilisation (chauffage, climatisation, tempérage, etc.), soit par conduction, soit par échangeur de chaleur (non représenté). Dans une variante non représentée, la chambre d'échange chaude et la chambre d'échange froide sont reliées chacune à un circuit extérieur qui peut être équipé d'un moyen autorisant un échange de chaleur uniquement après atteinte d'une température prédéfinie dans ladite chambre d'échange concernée. Ce moyen peut être sous la forme d'un obturateur thermosensible ou piloté. Un tel moyen permet au générateur d'être performant plus rapidement, l'échange thermique n'étant possible qu'à partir du moment où le générateur est arrivé à un régime établi prédéfini.

Le fluide caloporteur utilisé est de préférence liquide. On choisira une composition chimique du fluide caloporteur adaptée à la plage de température voulue afin d'obtenir un échange thermique maximal. Ce fluide peut donc être liquide, gazeux ou diphasique. S'il est liquide, on utilisera par exemple de l'eau pure pour des températures positives et de l'eau additionnée d'antigel, par exemple un produit glycolé ou une saumure pour des températures négatives.

### Meilleure manière de réaliser l'invention:

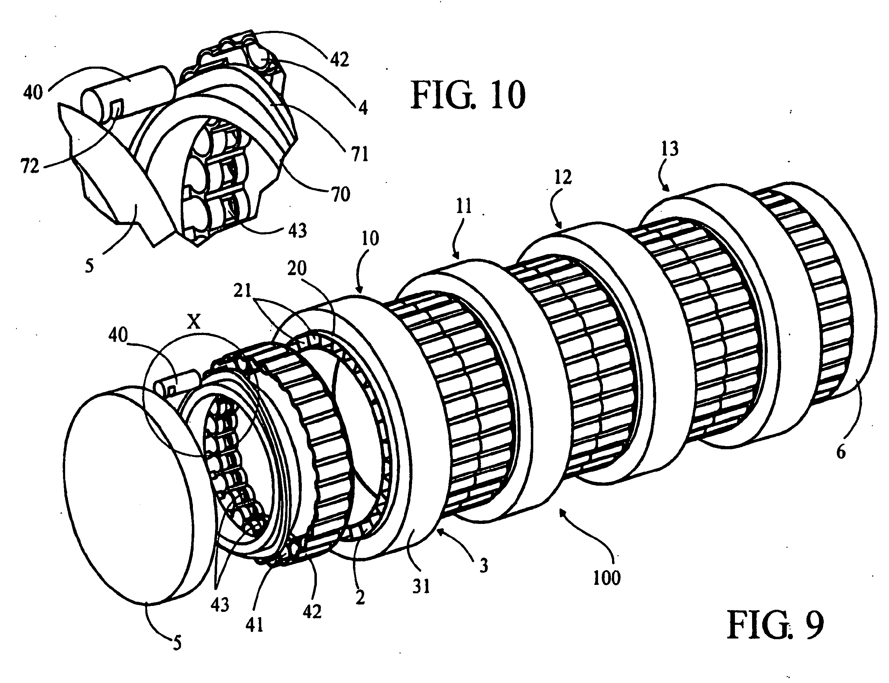

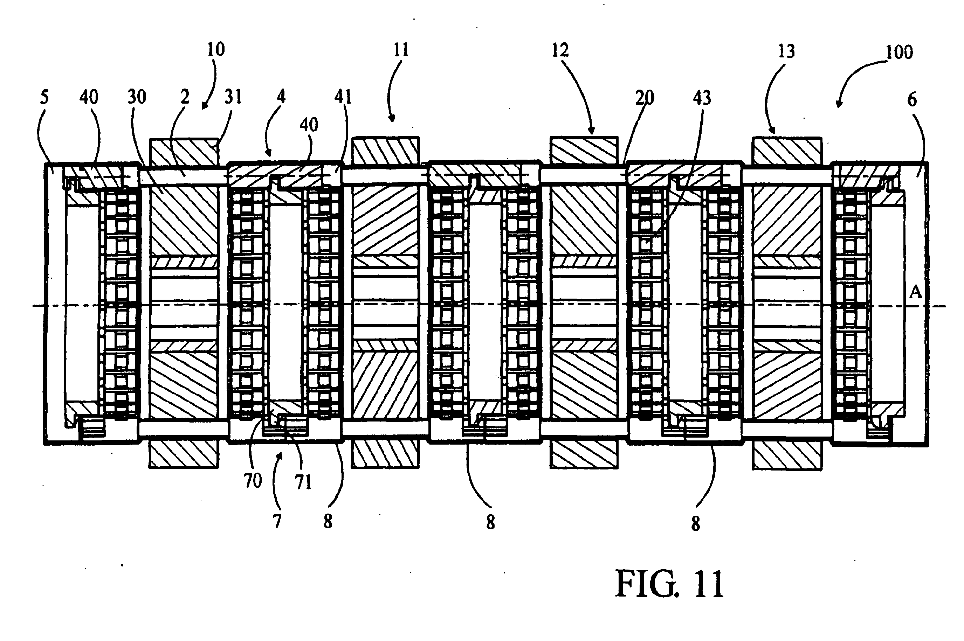

Les figures 9 à 11 illustrent un générateur thermique 100 comportant plusieurs modules thermiques 10, 11, 12, 13, similaires à celui décrit précédemment, ces modules étant empilés pour former plusieurs étages thermiques, et pouvant être identiques ou non. Les modules thermiques 10, 11, 12, 13 sont assemblés deux à deux par des chambres intermédiaires 8. Dans cette configuration étagée, les pistons de deux modules thermiques 10 à 13 adjacents peuvent être communs, comme illustré dans les figures susvisées, ce qui permet de simplifier et de réduire le prix de revient d'un tel générateur, de même que son encombrement total. En conséquence, les cames de commande 70 sont également communes et disposées dans les chambres intermédiaires 8. Ces chambres intermédiaires 8 peuvent être communicantes comme illustré dans les figures, ou étanches. Lorsqu'elles sont communicantes, ces chambres intermédiaires 8 permettent un brassage du fluide caloporteur entre deux étages thermiques successifs, le fluide passant d'un module thermique à l'autre par les orifices 43 prévus dans la chemise 42 des pistons 40. Ce brassage thermique contribue à augmenter le gradient de température d'un étage à l'autre et, par conséquent, le gradient de température entre les chambres d'échange chaude 5 et froide 6 prévues aux extrémités dudit générateur.

Dans une autre variante non représentée, ces chambres intermédiaires 8 peuvent être étanches. Dans ce cas, le fluide caloporteur passe d'un étage thermique à un autre uniquement par les éléments magnétocaloriques 2.

La configuration étagée telle que représentée peut bien entendu être étendue à des modules thermiques 10 à 13 présentant une structure linéaire. Le nombre de modules thermiques 10 à 13 n'est pas limitatif et est déterminé en fonction de l'application donnée.

### Possibilités d'application industrielle:

Toutes les pièces qui composent le générateur thermique 1, 100 selon l'invention peuvent être réalisées en série selon des processus industriels reproductibles. Toutes ces pièces à l'exception des éléments magnétocaloriques 2 et des moyens magnétiques 3 peuvent être réalisées dans des matériaux thermiquement isolants moulés, injectés ou similaires. Les modules thermiques 10 à 13 et les chambres d'échange 5, 6 peuvent être assemblés par tout moyen d'étanchéité approprié et tout moyen de fixation adéquat connu. La réalisation du générateur thermique 1, 100 par modules thermiques 10 à 13, compacts et empilables, qui peuvent être standardisés, permet de répondre à une large gamme d'applications aussi bien industrielles que domestiques, à des coûts compétitifs, dans un faible encombrement, en offrant des performances de pouvoir calorifique non égalées à ce jour avec ce type de générateurs.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Générateur thermique (1, 100) comportant des éléments magnétocaloriques (2), des moyens magnétiques (3) agencés pour soumettre alternativement lesdits éléments magnétocaloriques (2) à une variation de champ magnétique et créer alternativement dans chaque élément magnétocalorique (2) un cycle de chauffage et un cycle de refroidissement, au moins un fluide caloporteur agencé pour collecter les calories et/ou les frigories produites par lesdits éléments magnétocaloriques (2) au cours des cycles de chauffage et de refroidissement, au moins une chambre d'échange chaude (5) et une chambre d'échange froide (6) prévues respectivement aux extrémités chaude et froide dudit générateur (1, 100), et des moyens de circulation (4) du fluide caloporteur entre lesdits éléments magnétocaloriques (2) et lesdites chambres d'échange (5, 6), ledit générateur comportant au moins un module thermique (10-13) comportant au moins un jeu de N éléments magnétocaloriques (2) disposés de manière adjacente, lesdits moyens de circulation (4) étant synchronisés avec la variation du champ magnétique et agencés pour déplacer alternativement ledit fluide caloporteur à l'intérieur dudit module thermique (10-13) simultanément dans deux directions opposées, entre les chambres d'échange chaude (5) et froide (6) à travers lesdits éléments magnétocaloriques (2), de sorte qu'une première fraction de fluide caloporteur circule en direction de la chambre d'échange chaude (5) à travers lesdits éléments magnétocaloriques (2) soumis à un cycle de chauffage, et qu'une seconde fraction de fluide caloporteur circule en direction de la chambre d'échange froide (6) à travers lesdits éléments magnétocaloriques (2) soumis à un cycle de refroidissement, et inversement, **caractérisé en ce que** lesdits moyens de circulation (4) sont agencés pour déplacer ledit fluide caloporteur entre lesdites chambres d'échange chaude (5) et froide (6) selon un mouvement de va-et-vient et comportent au moins un jeu de N pistons (40) disposés en regard desdits éléments magnétocaloriques (2) et animés d'un mouvement de translation alternatif par un mécanisme d'entraînement (7) qui comporte au moins une came de commande (70) entraînée par un actionneur.

2. Générateur selon la revendication 1, **caractérisé en ce que** ladite came de commande (70) comporte un profil de came (71) de forme sensiblement sinusoïdale, dont l'amplitude détermine la course desdits pistons (40) et dont la phase sinusoïde correspond globalement à un cycle de chauffage et un cycle de refroidissement desdits éléments magnétocaloriques (2).

3. Générateur selon l'une quelconque des revendications précédentes, **caractérisé en ce que** lesdits moyens de circulation (4) comportent deux jeux de N pistons (40) disposés de chaque côté desdits éléments magnétocaloriques (2).

4. Générateur selon l'une quelconque des revendications précédentes, **caractérisé en ce que** les éléments magnétocaloriques (2) comportent des passages de fluide débouchant, ces passages de fluide étant formés de pores, de canaux ou d'une combinaison de ces éléments.

5. Générateur selon la revendication 1, **caractérisé en ce que** lesdits moyens magnétiques (3) comportent à proximité desdits éléments magnétocaloriques (2) au moins un arrangement magnétique (30) formé de zones aimantées (ZA) et de zones non aimantées (ZN) alternées, ledit arrangement magnétique (30) étant couplé à un actionneur pour être mobile par rapport auxdits éléments magnétocaloriques (2).

6. Générateur selon la revendication 5, **caractérisé en ce que** lesdits moyens magnétiques (3) comportent un dispositif de fermeture de champ (31) disposé à l'opposé dudit arrangement magnétique (30) pour fermer le flux magnétique généré par lesdites zones aimantées (ZA) à travers lesdits éléments magnétocaloriques (2).

7. Générateur selon les revendications 2 et 5, **caractérisé en ce que** chaque couple formé par une zone aimantée (ZA) et une zone non aimantée (ZN) s'étend sur une distance correspondant globalement à une sinusoïde dudit profil de came (71).

8. Générateur selon la revendication 5, **caractérisé en ce que** chaque zone aimantée (ZA) comporte au moins deux aimants permanents (32) de polarité opposée, assemblés à un noyau (33) à forte perméabilité magnétique de manière à concentrer le flux magnétique desdits aimants en direction des éléments magnétocaloriques (2).

9. Générateur selon la revendication 5, **caractérisé en ce que** ledit module thermique (10-13) présente une structure circulaire dans laquelle les éléments magnétocaloriques (2) sont disposés en cercle autour d'un axe central (A) et **en ce que** la came de commande (70) et l'arrangement magnétique (30) sont concentriques à cet axe central (A) et entraînés en rotation autour dudit axe (A).

10. Générateur selon la revendication 5, **caractérisé en ce que** ledit module thermique présente une structure linéaire dans laquelle les éléments magnétocaloriques sont alignés et **en ce que** la came de commande et l'arrangement magnétique sont entraînés en translation alternative le long desdits éléments.

11. Générateur selon l'une quelconque des revendications précédentes, **caractérisé en ce qu'**il comporte un nombre X de modules thermiques (10-13) empilés pour former un générateur à X étages thermiques et **en ce que** lesdits modules thermiques (10-13) sont assemblés deux à deux par des chambres intermédiaires (8).

12. Générateur selon la revendication 11; **caractérisé en ce que** lesdites chambres intermédiaires (8) communiquent avec lesdits pistons (40) et forment des chambres de brassage de fluide caloporteur entre deux modules thermiques (10-13) consécutifs.

13. Générateur selon la revendication 11, **caractérisé en ce que** lesdites chambres intermédiaires (8) ne communiquent pas avec lesdits pistons (40), le fluide caloporteur passant d'un module thermique (10-13) à un autre par lesdits éléments magnétocaloriques (2).

14. Générateur selon la revendication 11, **caractérisé en ce que** les pistons (40) de deux modules thermiques (10-13) consécutifs sont communs.

15. Générateur selon l'une quelconque des revendications précédentes, **caractérisé en ce que** la chambre d'échange chaude et la chambre d'échange froide sont reliées chacune à un circuit extérieur équipé d'un moyen autorisant un échange de chaleur uniquement après atteinte d'une température prédéfinie dans ladite chambre d'échange concernée.

## Claims

1. Heat generator (1, 100) comprising magnetocaloric elements (2), magnetic devices (3) arranged so as to alternately subject said magnetocaloric elements (2) to a variation in magnetic field and alternately create in each magnetocaloric element (2) a heating cycle and a cooling cycle, at least one heat transfer fluid arranged to collect the calories and/or the frigories produced by said magnetocaloric elements (2) during the heating and cooling cycles, at least one hot exchange chamber (5) and one cold exchange chamber (6) respectively placed at the hot and cold ends of said generator (1, 100), and means of circulation (4) for the heat transfer fluid between said magnetocaloric elements (2) and said exchange chambers (5, 6), said generator comprising at least one thermal module (10-13) comprising at least one set of N magnetocaloric elements (2) arranged adjacently, said means of circulation (4) being synchronized with the variation in magnetic field and being arranged to alternately circulate said heat transfer fluid inside said thermal module (10-13) in two opposite directions at the same time, between the hot (5) and cold (6) exchange chambers through said magnetocaloric elements (2), so that a first fraction of the heat transfer fluid circulates towards the hot exchange chamber (5) through said magnetocaloric elements (2) subjected to a heating cycle, and that a second fraction of the heat transfer fluid circulates towards the cold exchange chamber (6) through said magnetocaloric elements (2) subjected to a cooling cycle, and inversely, **characterized in that** said means of circulation (4) are arranged to displace said head transfer fluid between the hot (5) and cold (6) exchange chambers in a reciprocating movement, and comprise at least one set of N pistons (40) positioned opposite the said magnetocaloric elements (2) and subjected to a reciprocating translation movement by a driving mechanism (7) that comprises at least one actuating cam (70) driven by an actuator.

2. Generator according to claim 1, **characterized in that** said actuating cam (70) comprises a cam profile (71) with roughly sinusoidal shape, the amplitude of which determines the stroke of said pistons (40) and the sinusoidal phase of which globally corresponds to a heating cycle and a cooling cycle of said magnetocaloric elements (2).

3. Generator according to any of the previous claims, **characterized in that** said means of circulation (4) comprise two sets of N pistons (40) positioned on each side of said magnetocaloric elements (2).

4. Generator according to any of the previous claims, **characterized in that** said magnetocaloric elements (2) comprise emerging fluid passages, which are formed of pores, channels, grooves or a combination of these elements.

5. Generator according to claim 1, **characterized in that** said magnetic devices (3) comprise at least one magnetic arrangement (30) formed of alternate magnetized zones (ZA) and non magnetized zones (ZN) in the vicinity of said magnetocaloric elements (2), said magnetic arrangement (30) being coupled with an actuator so as to be mobile in relation to said magnetocaloric elements (2).

6. Generator according to claim 5, **characterized in that** said magnetic devices (3) comprise a field closing device (31) positioned opposite said magnetic arrangement (30) to close the magnetic flux generated by the said magnetized zones (ZA) through said magnetocaloric elements (2).

7. Generator according to claims 2 and 5, **characterized in that** each couple formed by a magnetized zone (ZA) and a non magnetized zone (ZN) extends over a distance that globally corresponds to a sinusoid of said cam profile (71).

8. Generator according to claim 5, **characterized in that** each magnetized zone (ZA) comprises at least two permanent magnets (32) with opposite polarities, assembled on a core (33) with high magnetic permeability so as to concentrate the magnetic flux of said magnets towards the magnetocaloric elements (2).

9. Generator according to claim 5, **characterized in that** said thermal module (10-13) has a circular structure in which the magnetocaloric elements (2) are arranged in a circle around a central axis (A) and **in that** the actuating cam (70) and the magnetic arrangement (30) are concentric with this central axis (A) and put into rotation around said axis (A).

10. Generator according to claim 5, **characterized in that** said thermal module has a linear structure in which the magnetocaloric elements are aligned and **in that** the actuating cam and the magnetic arrangement are driven into reciprocating translation along said elements.

11. Generator according to any of the previous claims, **characterized in that** it comprises X number of thermal modules (10-13) stacked to form a generator with X thermal stages and **in that** said thermal modules (10-13) may be assembled in pairs using the intermediate chambers (8).

12. Generator according to claim 11, **characterized in that** said intermediate chambers (8) communicate with said pistons (40) and form heat transfer fluid mixing chambers between two consecutive thermal modules (10-13).

13. Generator according to claim 11, **characterized in that** said intermediate chambers (8) do not communicate with the said pistons (40), as the heat transfer fluid passes from one thermal module (10-13) to another via said magnetocaloric elements (2).

14. Generator according to claim 11, **characterized in that** the pistons (40) of two consecutive thermal modules (10-13) are shared.

15. Generator according to any of the previous claims, **characterized in that** the hot exchange chamber and the cold exchange chamber are each connected to an external circuit fitted with a device that allows a heat exchange only after reaching a predefined temperature inside said exchange chamber in question.

## Patentansprüche

1. Wärmegenerator (1, 100) mit magnetokalorischen Elementen (2), mit magnetischen Mitteln (3), die angeordnet sind, um die besagten magnetokalorischen Elemente (2) abwechselnd einer Magnetfeld-Variation auszusetzen und abwechselnd in jedem magnetokalorischen Element (2) einen Heiz-Zyklus und einen Kühl-Zyklus zu erzeugen, mit mindestens einem Wärmeübertragungsfluid, das ausgelegt ist, um die von den besagten magnetokalorischen Elementen (2) während den Heiz- und Kühl-Zyklen produzierten Kalorien und/oder Frigorien zu sammeln, mit mindestens einer warmen Austauschkammer (5) und einer kalten Austauschkammer (6), die an dem warmen bzw. an dem kalten Ende des besagten Generators (1, 100) vorgesehen sind, und mit Umlaufmitteln (4) für das Wärmeübertragungsfluid zwischen den besagten magnetokalorischen Elementen (2) und den besagten Austauschkammem (5, 6), wobei der besagte Generator mindestens ein Wärme-Modul (10-13) aufweist, welches mindestens einen Satz von N anliegend angeordneten magnetokalorischen Elementen (2) beträgt, wobei die besagten Umlaufmittel (4) mit der Variation des Magnetfelds synchronisiert und angeordnet sind, um das besagte Wärmeübertragungsfluid abwechselnd in dem besagten Wärme-Modul (10-13) gleichzeitig in zwei entgegen gesetzte Richtungen zu bewegen, zwischen der warmen (5) und der kalten (6) Austauschkammer, durch die magnetokalorischen Elemente (2) hindurch, so dass ein erster Teil des Wärmeübertragungsfluids durch die einem Heiz-Zyklus ausgesetzten magnetokalorischen Elemente (2) hindurch in Richtung der warmen Austauchkammer (5) und ein zweiter Teil des Wärmeübertragungsfluids durch die einem Kühl-Zyklus ausgesetzten magnetokalorischen Elemente (2) hindurch in Richtung der kalten Austauchkammer (6) fließt, und umgekehrt, **dadurch gekennzeichnet, dass** die besagten Umlaufmittel (4) ausgelegt sind, um das besagte Wärmeübertragungsfluid zwischen der besagten warmen (5) und kalten (6) Austauschkammer in einer hin und her Bewegung zu verschieben und mindestens einen Satz von N Kolben (40) betragen, die gegenüber der besagten magnetokalorischen Elemente (2) angeordnet sind und durch einen Antriebsmechanismus (7), der mindestens eine durch einen Antrieb angetriebene Steuerkurve (70) beträgt, in einer abwechselnden hin und her Translation angetrieben werden.

2. Generator nach Anspruch 1, **dadurch gekennzeichnet, dass** die besagte Steuerkurve (70) ein merklich sinusförmiges Kurvenprofil (71) aufweist, dessen Amplitude den Hub der besagten Kolben (40) bestimmt und dessen Sinusphase global einem Heiz-Zyklus und einem Kühl-Zyklus der besagten magnetokalorischen Elemente (2) entspricht.

3. Generator nach irgendwelchem der vorhergehenden Ansprüche, **dadurch gekennzeichnet, dass** die besagten Umlaufmittel (4) zwei beidseitig der besagten magnetokalorischen Elemente (2) angeordnete Sätze von N Kolben (40) betragen.

4. Generator nach irgendwelchem der vorhergehenden Ansprüche, **dadurch gekennzeichnet, dass** die magnetokalorischen Elemente (2) offene Durchgänge für das Fluid betragen, wobei diese Fluid-Durchgänge aus Poren, Kanälen oder einer Kombination dieser Elemente bestehen.

5. Generator nach Anspruch 1, **dadurch gekennzeichnet, dass** die besagten magnetischen Mittel (3) in der Nähe der besagten magnetokalorischen Elemente (2) mindestens eine magnetische Anordnung (30) betragen, die aus abwechselnd magnetischen (ZA) und nicht magnetischen (ZN) Bereichen besteht, wobei die besagte magnetische Anordnung (30) an einen Antrieb gekoppelt ist, um in Bezug auf die besagten magnetokalorischen Elemente (2) beweglich zu sein.

6. Generator nach Anspruch 5, **dadurch gekennzeichnet, dass** die besagten magnetischen Mittel (3) eine gegenüber der besagten magnetischen Anordnung (30) angeordnete Vorrichtung (31) zum Schließen des Magnetfelds betragen, um den von den besagten magnetischen Bereichen (ZA) durch die besagten magnetokalorischen Elemente (2) hindurch erzeugten Magnetfluss zu schließen.

7. Generator nach Ansprüchen 2 und 5, **dadurch gekennzeichnet, dass** jedes von einem magnetischen Bereich (ZA) und einem nicht magnetischen Bereich (ZB) gebildete Paar sich auf einem Abstand erstreckt, der global einer Sinuswelle des besagten Kurvenprofils (71) entspricht.

8. Generator nach Anspruch 5, **dadurch gekennzeichnet, dass** jeder magnetische Bereich (ZA) mindestens zwei Permanentmagnete (32) mit entgegen gesetzter Polarität beträgt, die mit einem Kern (33) mit einer hohen magnetischen Permeabilität zusammengebaut sind, um den Magnetfluss der besagten Magnete in Richtung der magnetokalorischen Elemente (2) zu konzentrieren.

9. Generator nach Anspruch 5, **dadurch gekennzeichnet, dass** das besagte Wärme-Modul (10-13) eine kreisförmige Struktur aufweist, in der die magnetokalorischen Elemente (2) auf einem Kreis um eine Mittelachse (A) angeordnet sind, und **dadurch**, dass die Steuerkurve (70) und die magnetische Anordnung (30) mit dieser Mittelachse (A) konzentrisch sind und um die besagte Achse (A) in Drehung angetrieben werden.

10. Generator nach Anspruch 5, **dadurch gekennzeichnet, dass** das besagte Wärme-Modul eine lineare Struktur aufweist, in der die magnetokalorischen Elemente auf einer Reihe angeordnet sind, und **dadurch**, dass die Steuerkurve und die magnetische Anordnung in einer hin und her Translation entlang der besagten Elemente angetrieben werden.

11. Generator nach irgendwelchem der vorhergehenden Ansprüche, **dadurch gekennzeichnet, dass** er eine Anzahl X von Wärme-Modulen (10-13) beträgt, die aufgestapelt sind, um einen Generator mit X Wärmeerzeugungsstufen zu bilden, und **dadurch**, dass die besagten Wärme-Modulen (10-13) paarweise durch Zwischenkammern (8) verbunden sind.

12. Generator nach Anspruch 11, **dadurch gekennzeichnet, dass** die besagten Zwischenkammern (8) mit den besagten Kolben (40) in Verbindung stehen und Umrührkammern für das Wärmeübertragungsfluid zwischen zwei aufeinanderfolgenden Wärme-Modulen (10-13) bilden.

13. Generator nach Anspruch 11, **dadurch gekennzeichnet, dass** die besagten Zwischenkammern (8) nicht mit den besagten Kolben (40) in Verbindung stehen, wobei das Wärmeübertragungsfluid über die besagten magnetokalorischen Elemente (2) von einem Wärme-Module (10-13) zum folgenden fließt.

14. Generator nach Anspruch 11, **dadurch gekennzeichnet, dass** die Kolben (40) von zwei aufeinanderfolgenden Wärme-Modulen (10-13) gemeinsam sind.

15. Generator nach irgendwelchem der vorhergehenden Ansprüche, **dadurch gekennzeichnet, dass** die warme Austauschkammer und die kalte Austauschkammer jeweils mit einem externen Kreislauf verbunden sind, der mit einem Mittel ausgestattet ist, das einen Wärmeaustausch erst nach dem Erreichen einer vordefinierten Temperatur in der betroffenen Austauschkammer erlaubt.
